Europäisches Patentamt

European Patent Office

Office européen des brevets

(11) Veröffentlichungsnummer : **0 118 073**
**B1**

## (12) EUROPÄISCHE PATENTSCHRIFT

(45) Veröffentlichungstag der Patentschrift :
20.08.86

(21) Anmeldenummer : 84101756.9

(22) Anmeldetag : 20.02.84

(51) Int. Cl.⁴ : **H 01 F 41/00, B 29 C 39/42**

(54) Verfahren zum Umgiessen von Metallkörpern, insbesondere Oberspannungswicklungen von Transformatoren.

(30) Priorität : 02.03.83 DE 3307396

(43) Veröffentlichungstag der Anmeldung :
12.09.84 Patentblatt 84/37

(45) Bekanntmachung des Hinweises auf die Patenterteilung : 20.08.86 Patentblatt 86/34

(84) Benannte Vertragsstaaten :
AT BE CH DE FR GB IT LI NL SE

(56) Entgegenhaltungen :
AT-B- 246 985
CH-A- 362 224
DE-A- 1 439 352
DE-B- 1 213 595
DE-B- 1 228 781
GB-A- 1 108 595
GB-A- 1 208 351

(73) Patentinhaber : VOLTA-WERKE Elektricitäts-GmbH
Oraniendamm 64
D-1000 Berlin 26 (DE)

(72) Erfinder : Schaich, Willi, Dipl.-Ing.
Oberboihinger Strasse 50
D-7312 Kirchheim/Lindorf (DE)

(74) Vertreter : Mehl, Ernst, Dipl.-Ing. et al
Postfach 22 01 76
D-8000 München 22 (DE)

## Beschreibung

Die Erfindung betrifft ein Verfahren zum Umgießen von Metallkörpern, insbesondere Wicklungen von Transformatoren, mit Tränk-, Imprägnier- oder Gießharzen in einer die Metallkörper enthaltenden geschlossenen Gießform, wobei eine Aufbereitung der Gießmasse in einem Vorratsgefäß in Vakuum erfolgt und wobei die Gießform selbst vor dem Füllen mit Gießmasse ebenfalls evakuiert wird.

Bei den meisten der jetzt üblichen Trockentransformatoren sind die Wicklungen, insbesondere die Oberspannungswicklungen in Gießharzkörper eingebettet. Dadurch wird eine sehr gute Betriebssicherheit erreicht. Bei steigenden Einheitsleistungen und Nennspannungen wachsen jedoch die Stückgewichte der Gießharzkörper verhältnismäßig schnell an, so daß hinsichtlich der Gewährleistung der Homogenität der Gießharzkörper besondere Anstrengungen unternommen werden müssen.

Durch die AT-PS-246.985 ist bereits ein Verfahren zum Umgießen von metallischen Körpern mit Gießharz bekannt, bei dem eine Gießform vor dem Füllen mit Gießharz evakuiert wird. Die Gießmasse wird bei diesem Verfahren im Anschluß an ihre Aufbereitung unter atmosphärischem Druck in einem Vorratsgefäß zwischengespeichert und während und nach dem Verguß durch den atmosphärischen Druck in die Gießform gepreßt. Mit diesem Verfahren lassen sich jedoch nur verhältnismäßig große Wandstärken mit ausreichend guter Homogenität gewährleisten.

Darüber hinaus ist es auch üblich, schon die zum Vergießen von Oberspannungswicklungen von Transformatoren vorgesehene Gießmasse im Vakuum zu mischen und aufzubereiten, um dadurch den Gasgehalt der in die evakuierte Gießform eingefüllten Gießmasse auf ein Minimum zu reduzieren. Trotzdem lassen sich jedoch kleine und kleinste Gaseinschlüsse nicht vollständig vermeiden, so daß zur Einhaltung der erforderlichen Spannungsfestigkeit und Betriebssicherheit relativ große Wandstärken für den Gießharzumguß von Transformatorwicklungen erforderlich sind. Diese verhältnismäßig großen Wandstärken hemmen einerseits die Abfuhr der Verlustwärme aus den Wicklungen und haben unerwünscht große Stückgewichte für die Gießmassekörper zur Folge.

Der Erfindung liegt daher die Aufgabe zugrunde, zum Umgießen von Metallteilen, insbesondere Transformatorwicklungen, ein Verfahren zu schaffen, das einen extrem gasarmen Gießkörper und damit eine sehr gute Spannungsfestigkeit auch bei niedrigen Wandstärken im Gießmassekörper gewährleistet.

Diese Aufgabe wird ausgehend von einem Verfahren der eingangs genannten Art dadurch gelöst,

daß die Gießmasse von einer Pumpe getrieben durch eine vakuumdicht angeschlossene lösbare Zuleitung von unten in die Gießform gedrückt wird,

daß die Gießform und zu umgießende Metallkörper durch die Gießmasse gespült werden, indem aus einem Steiger auf der Gießform austretende Gießmasse durch eine ebenfalls vakuumdicht angeschlossene Rückleitung in das Vorratsgefäß zurückfließt,

daß die zurückfließende Gießmasse in dem Vakuum des Vorratsgefäßes vor dem Zurückfallen in den Gießmassevorrat zu einem dünnen Film auseinandergezogen wird, daß die Gießform für jeden Verguß von einem Vielfachen der für einen Gießling erforderlichen Füllmenge der Gießmasse durchströmt wird, so daß beim Abschluß der Gießformspülung der Gießmassefilm im Vorratsgefäß blasenfrei ist und

daß die gefüllte Gießform für die Zeit der Aushärtung der Gießmasse von der Zu- und der Rückleitung gelöst wird.

Nach zweckmäßigen Ausgestaltungen des erfindungsgemäßen Verfahrens wird der Druck in der gefüllten Gießform vor dem Lösen der Zu- und der Rückleitung auf mehr als 1 bar erhöht und werden die Gießmasse und/oder der Metallkörper beheizt.

Die Anwendung des erfindungsgemäßen Verfahrens ist sehr vorteilhaft, weil durch die im Umlauf geführte Gießmasse und deren fortgesetzt ständig wiederholte Aufbereitung praktisch auch die letzten Reste von kleinen und kleinsten Gasbläschen aus der Gießform und aus dem zu vergießenden Metallkörper entfernt werden. Dadurch wird ein extrem gasarmer und sehr homogener Gießmassekörper erreichbar, in dem praktisch die an Probestücken im Labor erreichbare Spannungsfestigkeit der Gießmasse erzielt wird.

Zur Durchführung des erfindungsgemäßen Verfahrens wird zweckmäßig eine Vorrichtung verwendet, gemäß der die Rückleitung im Vakuum des Vorratsgefäßes in einem nach oben offenen Rohr endet und wobei die aus dem Rohr austretende Gießmasse durch das Ablaufen über einen Kegel zu einem durch ein Fenster im Deckel des von innen beleuchteten Vorratsgefäßes sichtbaren Film auseinandergezogen ist. Dabei ist in die Zu- und die Rückleitung je ein Dreiwegeventil eingebaut, deren freie Anschlüsse zur Führung des Gießmassestromes bei abgenommener Gießform durch eine feste Leitung miteinander verbunden sind. Dabei ist außerdem eine Vakuumpumpe durch ein Dreiwegeventil wahlweise mit dem gießformseitigen Ende der Rückleitung oder mit einer Evakuierungsleitung für das Vorratsgefäß verbindbar.

Nach weiteren Ausgestaltungsmerkmalen der Vorrichtung zur Durchführung des erfindungsgemäßen Verfahrens ist in die Zuleitung ein Temperaturfühler und ein Gießmassefilter, in die Rückleitung ein Druckmesser und Drosselventil und in die Evakuierungsleitung ein Gasfilter und ein durch eine elastische Membran nach außen abgeschlossener Dehnkörper eingebaut.

Ein Ausführungsbeispiel der Erfindung ist anhand einer schematischen Darstellung näher erläutert.

Ein auf nicht näher dargestellte Art und Weise vorbereitetes Harzgemisch ist als Gießmassevorrat 11 in einem Vorratsgefäß 1 gespeichert. Das Vorratsgefäß 1 ist mit einer Heizung 21 ausgerüstet und seine Auslaßöffnung mündet in eine Zuleitung 23. In die Zuleitung 23 sind ein Temperaturmesser 13, eine Pumpe 2 zur Förderung der Gießmasse, ein Dreiwegeventil 3 und ein Filter 27 eingebaut.

Eine Gießform 10 ist über eine Trennstelle 14 an die Zuleitung 23 und über eine Trennstelle 15 an eine Rückleitung 24 angeschlossen. Eine gießformseitige Abzweigung der Rückleitung 24 ist über ein Absperrventil 26 mit einem Stutzen eines Dreiwegeventils 5 in einer Evakuierungsleitung 25 verbunden. Durch einen Druckmesser 12 wird der Druck in der Rückleitung 24 vor einem in diese eingebauten einstellbaren Drosselventil 20 angezeigt.

Die Rückleitung 24 ist über ein Dreiwegeventil 4 in den oberen Teil des Vorratsgefäßes 1 geführt und mündet dort in ein nach oben offenes Rohr 8, das die Spitze eines als Ablaufkegel dienenden Kegels 9 durchdringt. Das Vorratsgefäß 1 ist nach oben durch einen Deckel verschlossen, in dem ein Fenster 17 sowie ein Lüfungsstutzen 18 vorgesehen sind. Der Deckel ist außerdem von dem Ende der Evakuierungsleitung 25 durchsetzt. Die Evakuierungsleitung 25 ihrerseits trägt zwischen ihrer Mündung in das Vorratsgefäß 1 und dem Dreiwegeventil 5 einen Dehnkörper 6 zur Dämpfung von Druckänderungen bei der jeweiligen Inbetriebnahme der Vorrichtung und einen Filter 7 für aus dem Vorratsgefäß 1 abgesogene Gase.

An den dritten Stutzen des Dreiwegeventils 5 ist eine Vakuumpumpe 16 angeschlossen. Der jeweils bei der Evakuierung des Vorratsgefäßes 1 bzw. der Gießform 10 noch vorhandene Restdruck ist über ein umschaltbares Vakuummeßgerät 19 feststellbar.

Durch eine feste Leitung 22 ist über die Dreiwegeventile 3 und 4 der Ausgang der Pumpe 2 in der Zuleitung 23 unmittelbar mit dem Anschluß der Rückleitung 24 an das Vorratsgefäß 1 anschließbar, so daß der Weg über die Gießform 10 sowie die dieser vor- und nachgeschalteten Armaturen kurzschließbar ist. Zu diesem Zweck sind die Dreiwegeventile 3 und 4 ebenso wie das Dreiwegeventil 5 vorzugsweise als vakuumdichte Dreiwegekugelhähne ausgeführt.

Zur Durchführung des erfindungsgemäßen Verfahrens wird zunächst das Vorratsgefäß 1 mit einem Gießmassevorrat 11 gefüllt und gegebenenfalls durch die Heizung 21 aufgeheizt. Der flüssige Gießmassevorrat 11 wird nun durch die Pumpe 2 bei entsprechender Stellung der Dreiwegeventile 3 und 4 unmittelbar durch das Ende der Rückleitung 24 in das nach oben offene Rohr 8 gedrückt und fließt dann über den Kegel 9 ab. Dabei wird die Gießmasse auf dem Mantel des Kegels 9 zu einem dünnen Film auseinandergezogen und tropft dann von dem unteren Rand des Kegels 9 zurück in den Gießmassevorrat 11.

Gleichzeitig ist die Vakuumpumpe 16 durch entsprechende Stellung des Dreiwegeventils 5 über den Dehnkörper 6 und das Filter 7 sowie die Evakuierungsleitung 25 an den oberen Teil des Vorratsgefäßes 1 angeschlossen. Nach dem Einschalten der Vakuumpumpe 16 wird nunmehr das Vorratsgefäß 1 sowie der in diesem vorhandene Gießmassevorrat 11 gasfrei gepumpt. Dabei wird die Entgasung des Gießmassevorrats 11 dadurch erleichtert, daß die Gießmasse beim Ablaufen über den Kegel 9 zu einem dünnen Film auseinandergezogen wird, in dem sich auch sehr kleine Gaseinschlüsse nicht halten können.

Während der Entgasung der Gießmasse wird über die Trennstellen 14 und 15 eine vakuumdichte und mit Gießmasse zu umhüllenden Teilen beschickte Gießform 10 an die Zuleitung 23 und die Rückleitung 24 angeschlossen. Sobald nun die Entgasung des Gießmassevorrats 11 abgeschlossen ist, wird durch Umschalten des Dreiwegeventils 5 bei geöffnetem Absperrventil 26 und noch über die feste Leitung 22 geschlossenem Gießmassekreislauf die Gießform 10 ebenfalls evakuiert. Dabei wird das jeweils in dem Vorratsgefäß 1 bzw. in der Gießform 10 erreichte Vakuum durch das umschaltbare Vakuummeßgerät 19 ermittelt. Darüber hinaus wird durch das Fenster 17 der blasenfreie Ablauf der Gießmasse über den Kegel 9 überwacht.

Im Anschluß an die Evakuierung des Vorratsgefäßes 1 und der Gießform 10 wird das Absperrventil 26 geschlossen und werden die Dreiwegeventile 3 und 4 so eingestellt, daß die Gießmasse durch das Filter 27 und über die Trennstelle 14 von unten in die Gießform 10 gepreßt wird. Auch nach vollständiger Füllung der Gießform 10 wird jedoch der Gießmassestrom nicht unterbrochen, so daß die oben aus der Gießform 10 austretende Gießmasse über die Rückleitung 24 wieder dem Rohr 8 zugeführt wird und über den Kegel 9 abläuft.

Am Beginn jedes Gießvorganges ist das Drosselventil 20 so weit wie möglich geöffnet, so daß es ungehindert durchströmt wird. Die ständig von der Pumpe 2 getriebene Gießmasse nimmt auf ihrem Weg durch die Gießform 10 und die in diesem festgehaltenen Metallkörper von diesen zunächst noch festgehaltene kleine und kleinste Gasbläschen mit, die dann beim Ablaufen der Gießmasse über dem Kegel 9 aus dem dünnen Gießmassefilm austreten. Währenddessen wird das Vakuum im Vorratsgefäß 1 durch Betrieb der Vakuumpumpe 16 aufrechterhalten.

Nachdem ein Vielfaches der für einen Verguß erforderlichen Gießmassemenge durch die Gießform 10 geströmt ist, und außerdem in der Evakuierungsleitung 25 durch das Vakuummeßgerät 19 ein ausreichend niedriger Druck angezeigt wird, wird das Drosselventil 20 soweit geschlossen, daß im gießformseitigen Ende der Rückleitung 24 ein vorher bestimmter, am Druckmesser 12 ablesbarer Druck zwischen der Pumpe 2 und dem Drosselventil 20, also auch in der Gießform 10, aufgebaut ist.

Nunmehr werden die Dreiwegeventile 3 und 4 wieder auf die feste Leitung 22 umgeschaltet, so daß die Gießmasse wieder in einem kleinen Kreislauf fließt.

An der gefüllten Gießform wird nunmehr die in deren Boden angebrachte Einlaßöffnung geschlossen und die Anschlußstutzen der Gießform 10 werden an den Trennstellen 14 und 15 von der Zuleitung 23 sowie der Rückleitung 24 gelöst. Über den offenen Steiger der Gießform 10 lastet nunmehr auf der Gießmasse lediglich der atmosphärische Druck. Zur vollständigen Aushärtung des in der Gießform 10 eingeschlossenen Gießlings wird diese nun bei der hierfür erforderlichen Temperatur für die erforderliche Zeit bis zur Entformung des Gießlings aufgestellt.

Jeweils unmittelbar nach dem Abnehmen einer gefüllten Gießform 10 wird wieder eine zum Verguß vorbereitete, mit den zu umgießenden Metallteilen bestückte Gießform 10 an den Trennstellen 14 und 15 an die Zuleitung 23 sowie die Rückleitung 24 angeschlossen und durch Öffnen des Absperrventils 26 sowie durch Umstellung des Dreiwegeventils 5 über die Vakuumpumpe 16 evakuiert und dadurch für die Spülung mit Gießmasse und den Verguß vorbereitet.

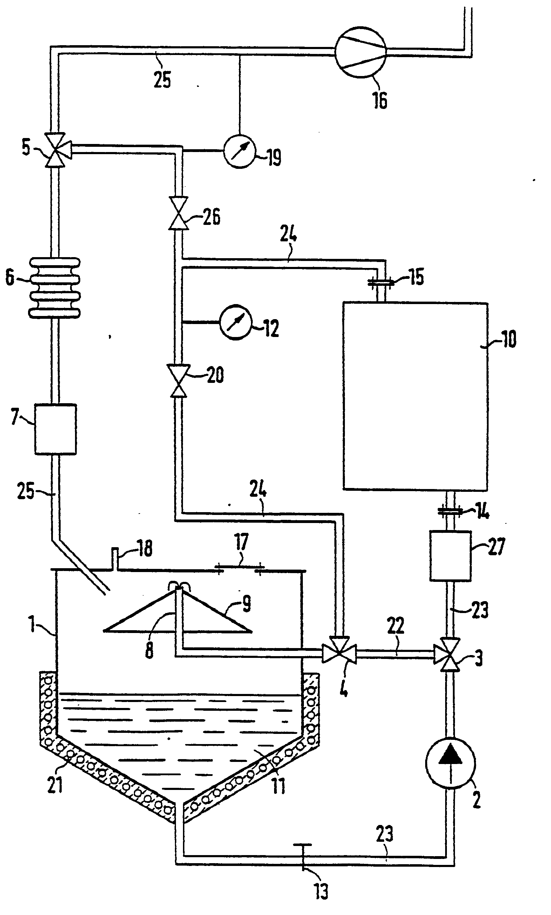

**Patentansprüche**

1. Verfahren zum Umgießen von Metallkörpern, insbesondere Wicklungen von Transformatoren, mit Tränk-, Imprägnier- oder Gießharzen in einer die Metallkörper enthaltenden, geschlossenen Gießform (10)
bei dem eine Aufbereitung der Gießmasse in einem Vorratsgefäß (1) in Vakuum erfolgt und
bei dem die Gießform (10) vor dem Füllen mit Gießmasse evakuiert wird,
dadurch gekennzeichnet,
daß die Gießmasse von einer Pumpe (2) getrieben durch eine vakuumdicht angeschlossene lösbare Zuleitung (23) von unten in die Gießform (10) gedrückt wird,
daß Gießform (10) und Metallkörper durch die Gießmasse gespült werden, indem aus einem Steiger auf der Gießform (10) austretende Gießmasse durch eine ebenfalls vakuumdicht angeschlossene Rückleitung (24) in das Vorratsgefäß (1) zurückfließt,
daß die zurückfließende Gießmasse in dem Vakuum des Vorratsgefäßes (1) vor dem Zurückfallen in den Gießmassevorrat (11) zu einem dünnen Film auseinandergezogen wird,
daß die Gießform (10) für jeden Verguß von einem Vielfachen der für einen Gießling erforderlichen Füllmenge der Gießmasse durchströmt wird, so daß beim Abschluß der Gießformspülung der Gießmassefilm im Vorratsgefäß (1) blasenfrei ist und
daß die gefüllte Gießform (10) für die Zeit der Aushärtung der Gießmasse von der Zu- (23) und der Rückleitung (24) gelöst wird.

2. Verfahren nach Anspruch 1, dadurch gekennzeichnet, daß der Druck in der gefüllten Gießform (10) vor dem Lösen der Zu- (23) und der Rückleitung (24) auf mehr als 1 bar erhöht wird.

3. Verfahren nach Anspruch 1 oder 2, dadurch gekennzeichnet, daß die Gießmasse und/oder der Metallkörper beheizt werden.

4. Vorrichtung zur Durchführung des Verfahrens nach einem der Ansprüche 1 bis 3, dadurch gekennzeichnet, daß die Rückleitung (24) im Vakuum des Vorratsgefäßes (1) in einem nach oben offenen Rohr (8) endet und daß die aus dem Rohr (8) austretende Gießmasse durch das Ablaufen über einen Kegel (9) zu einem durch ein Fenster (17) im Deckel des von innen beleuchteten Vorratsgefäßes (1) sichtbaren Film auseinandergezogen ist.

5. Vorrichtung nach Anspruch 4, dadurch gekennzeichnet, daß in die Zu- (23) und die Rückleitung (24) je ein Dreiwegeventil (3 bzw. 4) eingebaut ist, deren freie Anschlüsse zur Führung des Gießmassestromes bei abgenommener Gießform (10) durch eine feste Leitung (22) miteinander verbunden sind.

6. Vorrichtung nach Anspruch 4 und 5, dadurch gekennzeichnet, daß eine Vakuumpumpe (16) durch ein Dreiwegeventil (5) wahlweise mit dem gießformseitigen Ende der Rückleitung (24) und mit einer Evakuierungsleitung (25) für das Vorratsgefäß (1) verbindbar ist.

7. Vorrichtung nach Anspruch 4 bis 6, dadurch gekennzeichnet, daß in die Zuleitung (23) ein Temperaturfühler (13) und ein Gießmassefilter (27) eingebaut ist.

8. Vorrichtung nach Anspruch 4 bis 7, dadurch gekennzeichnet, daß in die Rückleitung (24) ein Druckmesser (12) und ein Drosselventil (20) eingebaut ist.

9. Vorrichtung nach Anspruch 4 bis 8, dadurch gekennzeichnet, daß in die Evakuierungsleitung (25) ein Gasfilter (7) und ein durch eine elastische Membran nach außen abgeschlossener Dehnkörper (6) eingebaut ist.

**Claims**

1. Process for casting around metal bodies, in particular coils of transformers, with soaking-, impregnating- or casting-resins in a closed casting mould (10) containing the metal bodies
whereby preparation of the casting material is carried out in a vacuum in a supply vessel (1) and
whereby the casting mould (10) is evacuated before being filled with casting material,
characterised in that
the casting material driven by a pump (12) is pressed into the casting mould (10) from the bottom through a releasable supply line (23) that is sealed in vacuum-tight manner,
in that the casting mould (10) and metal bodies are washed by the casting material, and casting material emerging out of a riser on the casting mould (10) flows back into the supply vessel (1) through a return line (24) that is also sealed in vacuum-tight manner,

in that the returning casting material in the vacuum of the supply vessel (1) is drawn out to form a thin film before falling back into the casting material supply (11),

in that for each casting process a multiple of the filling amount of the casting material necessary for a casting flows through the casting mould (10), so that when the casting mould washing is concluded, the casting material film in the supply vessel (1) is bubble-free and

in that the filled casting mould (10) is disconnected from the supply line (23) and the return line (24) while the casting material sets.

2. Process according to claim 1, characterised in that the pressure in the filled casting mould (10) is increased to more than 1 bar before disconnection from the supply line (23) and the return line (24).

3. Process according to claim 1 or 2, characterised in that the casting material and/or the metal body are heated.

4. Device for carrying out the process according to one of claims 1 to 3, characterised in that the return line (24) in the vacuum of the supply vessel (1) ends in a pipe (8) that is open at the top, and in that the casting material emerging from the pipe (8) is drawn out, by flowing over a cone (9), to form a film that is visible through a window (17) in the lid of the internally illuminated supply vessel (1).

5. Device according to claim 4, characterised in that into the supply line (23) and the return line (24) there is respectively incorporated a three-way valve (3 or 4), the free connections of which are joined together by means of a fixed line (22) for guiding the casting material stream when the casting mould (10) is removed.

6. Device according to claims 4 and 5, characterised in that a vacuum pump (16) can be connected by means of a three-way valve (5) optionally to the casting mould side-end of the return line (24) and to an evacuation line (25) for the supply vessel (1).

7. Device according to claims 4 to 6, characterised in that a temperature sensor (13) and a casting material filter (27) is incorporated into the supply line (23).

8. Device according to claims 4 to 7, characterised in that a pressure gauge (12) and a throttle valve (20) is incorporated into the return line (24).

9. Device according to claims 4 to 8, characterised in that a gas filter (7) and a resilient body (6), sealed outwardly by means of a flexible diaphragm, is incorporated into the evacuation line (25).

**Revendications**

1. Procédé pour enrober des corps métalliques, notamment des enroulements de transformateurs, avec des résines d'imbibition, d'imprégnation ou de coulée, dans un moule fermé (10) contenant les corps métalliques, selon lequel on réalise sous vide une préparation de la masse de coulée dans un réservoir (1), et

selon lequel on établit un vide à l'intérieur du moule (10) avant le remplissage avec la masse de coulée,

caractérisé par le fait que

la masse de coulée est refoulée par le bas dans le moule (10), à l'aide d'une pompe (2), par l'intermédiaire d'une canalisation détachable d'amenée (23), raccordée de façon étanche au vide,

que le moule (10) et les corps métalliques sont balayés par la masse de coulée, par le fait que la masse de coulée sortant d'une colonne montante agencée sur le moule (10) reflue dans le réservoir (1) en empruntant une canalisation de retour (24) également raccordée d'une manière étanche au vide,

que la masse de coulée, qui reflue, est étalée sous la forme d'une pellicule mince, dans le vide présent dans le réservoir (1), avant de retomber dans la réserve (11) de la masse de coulée,

que le moule (10) est traversé, lors de chaque coulée, par une quantité de la masse de remplissage multiple de la quantité de remplissage nécessaire pour une pièce coulée, de telle sorte que, à la fin du balayage du moule, la pellicule de la masse de coulée présente dans le réservoir (1) est exempte de bulles, et

que le moule rempli (10) est déconnecté de la canalisation d'amenée (23) et de la canalisation de retour (24), pour la durée du durcissement de la résine de coulée.

2. Procédé suivant la revendication 1, caractérisé par le fait qu'on augmente la pression dans le moule rempli (10) à plus de 1 bar avant le débranchement de la canalisation d'arrivée (23) et de la canalisation de retour (24).

3. Procédé suivant la revendication 1 ou 2, caractérisé par le fait qu'on chauffe la masse de coulée et/ou les corps métalliques.

4. Dispositif pour la mise en œuvre du procédé suivant l'une des revendications 1 à 3, caractérisé par le fait que la canalisation de retour (24) se termine par un tube (8) ouvert vers le haut à l'intérieur de l'espace sous vide du réservoir (1) et que la masse de coulée sortant du tube (8) s'étale, sous l'effet de son évacuation, sur un cône (9), de manière à former une pellicule visible à travers une fenêtre (17) ménagée dans le couvercle du réservoir (1) éclairé de l'intérieur.

5. Dispositif suivant la revendication 4, caractérisé par le fait que dans la canalisation d'amenée (23) et dans la canalisation de retour (24) se trouvent insérées des vannes à trois voies (3 et 4), dont les raccords libres sont réunis entre eux par une canalisation fixe (22), en vue de guider l'écoulement de la masse de coulée, lorsque le moule (10) est retiré.

6. Dispositif suivant les revendications 4 et 5, caractérisé par le fait qu'une pompe à vide (16) peut être reliée par l'intermédiaire d'une vanne à trois voies (5) au choix à l'extrémité, située du côté du moule, de la canalisation de retour (24) et à une canalisation (25) d'établissement du vide pour le réservoir (1).

7. Dispositif suivant les revendications 4 à 6, caractérisé par le fait qu'un capteur de température (13) et un filtre (27) pour la masse de coulée sont montés dans la canalisation d'amenée (23).

8. Dispositif suivant les revendications 4 à 7, caractérisé par le fait qu'un manomètre (12) et une vanne d'étranglement (20) sont montés dans la canalisation de retour (24).

9. Dispositif selon les revendications 4 à 8, caractérisé par le fait qu'un filtre à gaz (7) et un corps extensible (6) fermé vers l'extérieur par une membrane élastique sont montés dans la canalisation (25) d'établissement du vide.